# EUROPEAN PATENT SPECIFICATION

(11) **EP 1 689 118 B1**
(45) Date of publication and mention of the grant of the patent: **27.04.2011**
(21) Application number: 04797331.8
(22) Date of filing: 15.11.2004
(51) Int. Cl.: H04L 12/56

(54) **A method for controlling QoS**
Verfahren zur QoS-Steuerung
Procédé de contrôle de la qualité de service (QoS)

(30) Priority: 13.11.2003 CN 200310113626
(43) Date of publication of application: 09.08.2006
(73) Proprietor: Huawei Technologies Co., Ltd., Shenzhen, Guangdong Province 518129 (CN)
(72) Inventor: SU, Honghong, Shenzhen, Guangdong 518129 (CN); XIE, Jinsong, Shenzhen, Guangdong 518129 (CN); WANG, Zhaoxiang, Shenzhen, Guangdong 518129 (CN)
(74) Representative: Skuhra, Udo
(86) International application number: PCT/CN2004/001299
(87) International publication number: WO 2005/048527

(56) References cited:
- EP-A1- 1 361 769
- CN-A- 1 359 212
- CN-A- 1 423 435
- CN-A- 1 425 256
- US-B1- 6 449 251

## Description

### Field of the Technology

The invention relates to service transmission technology in general. More specifically, the invention relates to a method for controlling Quality of Service (QoS).

### Background of the Invention

With developments of various broadband services, the demands for Internet QoS becomes higher and higher. QoS is a technology used to solve such problems as network delay and jam. That is, under normal conditions, if a network is only used in specific application systems without time limit, for example, Web applications and E-mail configurations, QoS technology is not needed. However, QoS is necessary for core applications and multimedia applications, since it should guarantee that the important services are not delayed or lost when overload or jam occurs in networks.

If a QoS mechanism is introduced, correct transmissions of important services can be insured, and meanwhile, high-efficiency network operations can be guaranteed. After the QoS mechanism is introduced, the QoS guaranteed services would be transmitted to a QoS guaranteed Wide Area Network (QoS WAN). Of course, a QoS WAN is a logical concept, and it may still be a part of a bearer network. In fact, a QoS WAN may be a procedure of a router in a bearer network marking high priority for a service stream and sending the service stream to a high priority queue, and a QoS WAN may also be a separate private network or a Virtual Private Network (VPN).

The network equipment in the prior art can implement QoS policy using such technologies as Differentiated Service (DiffServ) and MultiProtocol Label Switching (MPLS). No matter if DiffServ, MPLS or other technology is adopted, a service is mostly differentiated as QoS guaranteed service according to a physical port or a quintet including a source address, a source port, a destination address, a destination port and a protocol type. Moreover, the relationship between the service and the physical port or quintet should be configured in advance, which does not meet the demand of QoS since it is more reasonable to differentiate a QoS guaranteed service according to service type and user in practical application.

At present, there are three technical schemes commonly used in the prior art, but none of them differentiates whether a service is a QoS guaranteed service according to service type and user. The three technical schemes will be illuminated respectively as follows:

### Technical scheme 1:

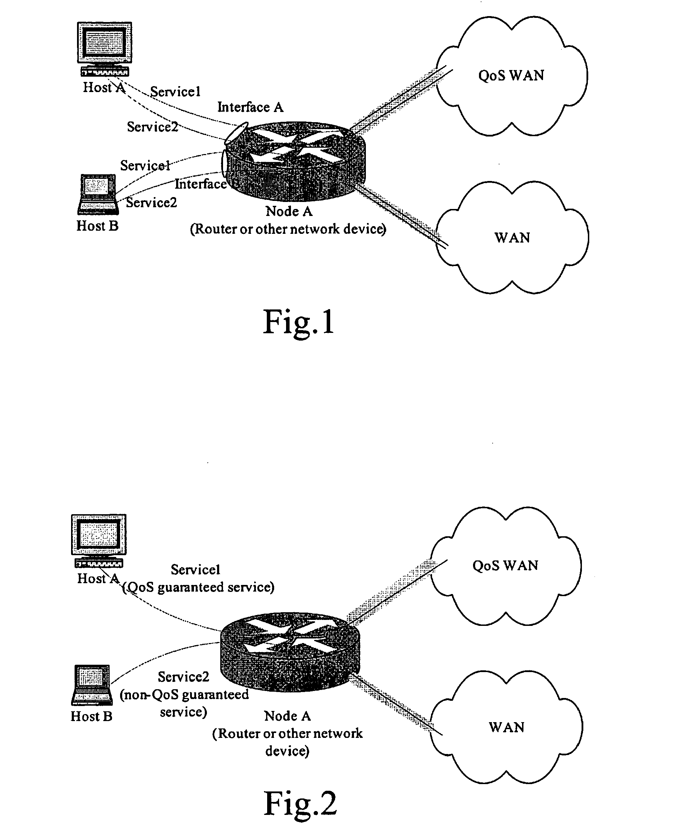

The present scheme adopts a traditional QoS differentiation method, which determines whether the current service is a QoS service mainly through identification of specific fields such as source address, destination address and destination port in messages or differentiation of specific physical port. Generally, the service differentiation is further implemented through matching with an Access Control List (ACL). Taking example for a system shown in figure 1, the service differentiation based on a physical interface will be described hereinafter.

Node A differentiates whether a service is a QoS guaranteed service according to a physical interface. Interface A of Node A is set to forward QoS guaranteed services, so services transmitted to Interface A are regarded as QoS guaranteed services and would be forwarded to a QoS WAN. Interface B of Node A is set to forward common services, i.e. non-QoS guaranteed services, so services transmitted to Interface B are regarded as common services and would be forwarded to a WAN without QoS guarantee. In this way, since Host A is directly connected to Interface A of Node A, all services initiated by Host A will be transmitted to a QoS WAN; while Host B is connected to Interface B of Node A, so all services initiated by Host B will be transmitted to a WAN without QoS guarantee.

Node A differentiates whether a service is a QoS guaranteed service according to a source address. The address of Host A is set to forward QoS guaranteed services. Since services initiated by Host A correspond definitely to the address of Host A, Node A forwards all services initiated by Host A to a QoS WAN. Since the services initiated by Host B correspond to source addresses different from the address of Host A, Node A forwards all services initiated by Host B to a WAN without QoS guarantee.

Technical scheme 1 has the following disadvantages:
1) It is difficult to implement QoS differentiation aimed at services. If Service 1 expects to be transmitted to a QoS WAN, and Service 2 expects to be transmitted to a WAN without QoS guarantee, which can not be realized through technical scheme 1. Although the services can also be differentiated according to destination port, this kind of differentiation is very coarse and inaccurate.
2) It is difficult to authenticate users. Whoever uses Host A, or transfers through Host A has the ability to use QoS guaranteed services, which would bring much trouble to operators when managing the QoS guaranteed services.
3) It is very difficult to perform service differentiation when the number of users is very large. If there are thousands of hosts requiring QoS guarantee, it needs a mass of configuration in network nodes such as Node A, which is almost impossible to implement.

### Technical scheme 2:

The present technical scheme adopts a strategy of trusting terminal unit. The idea of the technology is: a terminal unit pads a field related with QoS in service stream by itself, and a network unit trusts the padding made by the terminal unit and differentiates services according to the field. For example, for an IP message, the terminal unit can pad Type Of Service (TOS) domain to identify QoS. Technical scheme 2 is illuminated in figure 2.

Technical scheme 2 has the following disadvantages:
1) The terminal unit may arbitrarily mark high priority for the service stream for the sake of racing to occupy network resources. So this technical scheme is unreliable.
2) It is hard to uniformly control the QoS classification rule of service, and the same kind of service is likely to be marked with different level by different terminal unit.
3) It needs all access units in the network to have the ability to identify the QoS related field in service stream; otherwise, the identification is likely to be cleared.

### Technical scheme 3:

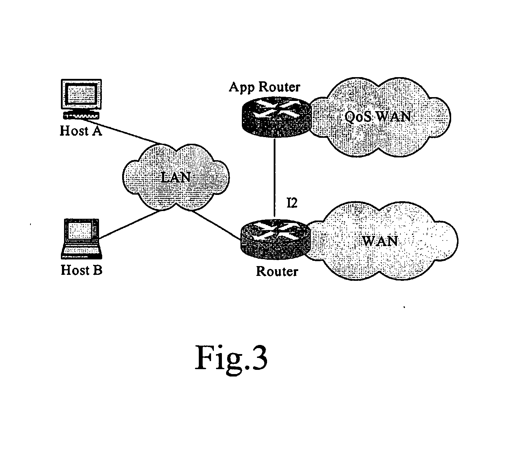

The present technical scheme adopts a normative routing technology. As shown in figure 3, a service stream requiring QoS guarantee is identified and routed to a QoS WAN by application router (App Router), while a common service stream will be routed to a WAN without QoS guarantee.

In figure 3, the App Router also has a routing function besides service identification function. The data transmitted into the App Router will be directly transmitted to a QoS WAN. Take the example for services following H.323 protocol which is a kind of multimedia communication protocol based on packet switch network, the App Router may be represented as an entity including a gatekeeper (GK) and a router. In addition, if an endpoint in a bearer network bearing H.323 protocol based services needs to use a QoS guaranteed service, the address of the GK needs to be configured in the endpoint, and the address information of the GK needs to be added in the service. In this way, the service will be transmitted to GK to implement corresponding QoS process. A simple flow is described as follows:
Step A. When Host A initiates a call requiring QoS guarantee, i.e., a QoS guaranteed call, it connects to the GK first. Since the App Router has GK function, signaling are normally transmitted to the App Router through the Router in figure 3.
Step B. The App Router determines Host X to which the media stream of Host A needs to be transmitted through analyzing the signaling.
Step C. The App Router informs, through the routing protocol, the Router to establish a routing list from Host A to Host X, and the corresponding interface is represented as I2;
Step D. The packets from Host A to Host X is transmitted to the App Router by the Router, and then transmitted into a QoS WAN by the App Router.

Technical scheme 3 has the following disadvantages:
1) The App Router needs to have a routing function, so the scalability of the App Router is relatively worse.
2) After the routing list is established dynamically, all the packets from Host A to Host X will be transmitted into a QoS WAN. In fact, however, not all the packets need QoS guarantee, and maybe only a few services need QoS guarantee. Therefore, this scheme cannot perform real differentiation of services.
3) The routing information should be exchanged dynamically between the App Router and the Router, leading to close disposition of the two units. Therefore, it is hard to dispose them in large scale.
4)The App Router must have function of router and GK. For an existing network including the GK, if services are to be differentiated by the App Router, the existing GK should be replaced with the App Router, which is very difficult to realize.
5) In the present scheme, in order that the services transmitted by the terminal can be processed by the App Router, the App Router must be disposed on the terminal side. However, it is also very difficult to dispose large numbers of App Routers on the terminal side.

However, all the above schemes cannot differentiate whether packets corresponding to a certain service need QoS policy, and cannot differentiate services according to service types. At present, stream classification on high layers, for example, service differentiation on application layer is similar to service differentiation according to service type, but cannot realize service differentiation according to user identification. However, service differentiation on high layers needs to directly control equipment of bearer layer or modify the contents of bearer layer, which is very difficult to realize.

US patent 6,449,251 provides a packet mapper that maps streams of data packets in a computer network, each data packet having a packet header containing feature values descriptive of the data packet. The packet mapper includes a mapping table that associates application-related features with network-reserved feature values from a range of feature values reserved for use
by selected network data packet streams, and a feature value mapper that performs at least one of (i) in each packet header having an application-related feature value associated with a network-reserved feature value, substituting the associated network-reserved feature value for the application-related feature value, and (ii) in each packet header having a network-reserved feature value associated with an application-related feature value, substituting the associated application-related feature value for the network-reserved feature value.

### Summary of the Invention

The present invention provides a method for controlling QoS as defined by independent claim 1, differentiating services on the premise of conducting minor modification to the existing bearer network and disposing the QPC anywhere in the network.

It can be seen from the scheme of the present invention that, the advantages are as follows:
1) The scheme of the present invention can administrate QoS guaranteed services in the existing bearer network simply and quickly through adding a small quantity of QPCs and forwarding QoS guaranteed services by the QPCs.
2)The scheme of the present invention can differentiate QoS guaranteed services according to service type through setting up a QPC for each QoS guaranteed service and transferring the QoS guaranteed service by corresponding QPC; it can also differentiate QoS guaranteed services according to users initiating the services through authenticating users initiating the services by QPCs, thereby differentiating QoS guaranteed services according to service types and users.
3) The QoS policy conversion provided in the scheme of the present invention is completed implicitly, and there is no need for QPCs to control equipment of the bearer network or directly modify such content as IP or TOS domain in the bearer network, which makes the nodes of the bearer network loosely coupled with QPCs. Therefore, the scheme of the present invention has strong independence and flexibility, and the number of QPC can be increased accordingly with the number of newly-developed services.
4) Since the nodes of the bearer network are loosely coupled with QPCs, there is no need for QPCs to be disposed close to the nodes initiating QoS guaranteed services in the bearer network, and QPCs can be disposed anywhere in the bearer network, i.e. they can be disposed on the edge of the bearer network or in the core of the bearer network, which avoids disposing large numbers of equipment on the edge of the bearer network and makes the implementation very simple. Moreover, the network construction mode can be flexibly selected according to the service scale and network structure.
5) The scheme of the present invention only adds QPCs, and hardly needs to modify the existing network equipment, which makes full use of the existing equipment and protects the existing investment.
6) Since all the streams of QoS guaranteed services are transferred by QPCs, security of network is greatly improved. For example, the equipment such as firewall can regard QPCs as dependable nodes and communicate only with QPCs.
7) Baleful embezzlement for QoS resources of the bearer network can be avoided through performing identification of higher layer to services by QPCs.
8) The present invention also provides a scheme of regarding QPC as service gateway office, and provides multiple detailed embodiments.
9) The scheme of the present invention can also change priority in service streams by QPCs, making the bearer network directly forward the service streams according to the priority information in the service streams.

### Brief Description of the Drawings

Figure 1 is a schematic diagram illustrating service differentiation through access physical port or source address of technical scheme 1 in the prior art.
Figure 2 is a schematic diagram illustrating service differentiation through trusting terminal unit of technical scheme 2 in the prior art.
Figure 3 is a schematic diagram illustrating QoS scheme based on adopting normative routing of technical scheme 3 in the prior art.
Figure 4 is a schematic diagram illustrating the structure of QoS policy converter (QPC) in accordance with an embodiment of the present invention.
Figure 5 is a schematic diagram illustrating the structure of QPC adopting tunnel mode in accordance with an embodiment of the present invention.
Figure 6 is a schematic diagram illustrating the structure of QPC adopting non-tunnel mode in accordance with an embodiment of the present invention.
Figure 7 is a schematic diagram illustrating realization of QoS policy conversion through stream convergence in accordance with an embodiment of the present invention.
Figure 8 is a flow chart illustrating a call by a single QPC in accordance with an embodiment of the present invention.
Figure 9 is a schematic diagram illustrating network construction of a kind of QoS policy conversion in accordance with an embodiment of the present invention.
Figure 10 is a schematic diagram illustrating network construction of another kind of QoS policy conversion which is not part of the present invention.
Figure 11 is a schematic diagram illustrating network construction of the third kind of QoS policy conversion which is not part of the present invention.

### Detailed Description of the Invention

According to an embodiment of the present invention, a QPC is set for each kind of QoS guaranteed services in a bearer network. The QoS guaranteed services are transmitted to the corresponding QPC. The QPC adds QoS related information in the service streams, and the service streams are forwarded to a QoS WAN according to QoS related information by the bearer network, thereby mapping QoS policies of QPCs into service streams implicitly and implementing stream classification according to QoS policies. Here, for the network, QPCs are standard endpoint equipment that can be accessed through physical interfaces such as Fast Ethernet (FE) interface and Gigabyte Ethernet (GE) interface and logically locate in backbone layer or convergence layer.

Now, the scheme of the present invention will be described in detail hereinafter with reference to an embodiment and accompanying drawings. The procedure of the scheme comprises steps as follows:
Step A. Sets a QPC in advance for each kind of QoS guaranteed services;
Step B. The network transmits a session related with a QoS guaranteed service to a QPC corresponding to the service.
   Different modes can be adopted to transmit a session related with a QoS guaranteed service to the QPC corresponding to the service according to practical applications. For example, for H.323 application, two modes can be adopted as follows:
   1) Directly registers the QPC in a call agent, and set a policy in the call agent. For example, the policy is transferring a kind of call requiring QoS guarantee to the QPC corresponding to the kind of call. When a H.323 endpoint initiates a call, the call agent analyzes the call and automatically locates the call to the corresponding QPC according to the policy. Specifically, the call agent determines the corresponding QPC and sends the address of the QPC to T1, and then T1 connects to the corresponding QPC according to the address sent from the call agent.
      Here, the call agent is generally a signaling process unit in application layer, e.g, a GK in H.323 application. GK is a kind of entity in network, which provides address conversion and network access control for H.323 terminals, gateways and Multi-point Control Units (MCU). GK can also provide other services such as bandwidth management and gateway locating for H.323 terminals, gateways and MCUs.
      This mode may be considered as transferring some of the functions of a QPC to a call agent and locating a call into a QPC through address analysis by the call agent.
   2) Sets a number prefix for each QPC, and H.323 endpoints initiate a call containing a QPC prefix and a called number. The GK analyzes the call and directs the call to the corresponding QPC according to the QPC prefix. The setting is similar to that in gateway, for example, using the number prefix 17909 when dialing IP telephone to call. It can be seen from this mode that, in fact, QPCs are selected under control of Host.
Step C. The bearer network transfers the session according to the network identifications of QPC, thereby mapping a QoS policy related with the QPC into a service stream implicitly and implementing stream classification according to QoS policy related with the QPC.

In addition, the QPCs may also implement service identification, user authentication and control for sessions, and forward the sessions according to the results of service identification and user authorization. For example, some kinds of services can be set with high priority of forwarding, so a QPC may set high priority of forwarding for a service after identifying the service and then forwards the service firstly. Another example is that a QPC may determine whether to provide a QoS guaranteed service for a user through authenticating the user, thereby realizing service differentiation based on users.

That is, when a QPC realizes service stream convergence, a QoS policy related with the QPC is mapped into a service stream implicitly, and then the QPC can implement stream classification according to the mapped QoS policy related with the QPC. For example, for an IP bearer network, after a QPC converging a service stream, the source IP address or destination IP address of the service stream related with a service on any router consequentially contains the IF address of the QPC corresponding to the service. In this way, the bearer network can implement stream classification according to the specific field in the related stream, i.e., the IP address of the QPC corresponding to the service. That is, the service may be transmitted to the QPC corresponding to the service by the bearer network according to the IP address of the QPC, and forwarded to a QoS WAN by the QPC corresponding to the service. The IP address of the QPC is one piece of QoS related information.

Obviously, if a service is not a QoS guaranteed service, the QPC does not need to implement the above-mentioned process, and the process flow can be directly ended after determining that the service is not a QoS guaranteed service.

The above-mentioned process is the main scheme in accordance with the embodiment of the present invention.

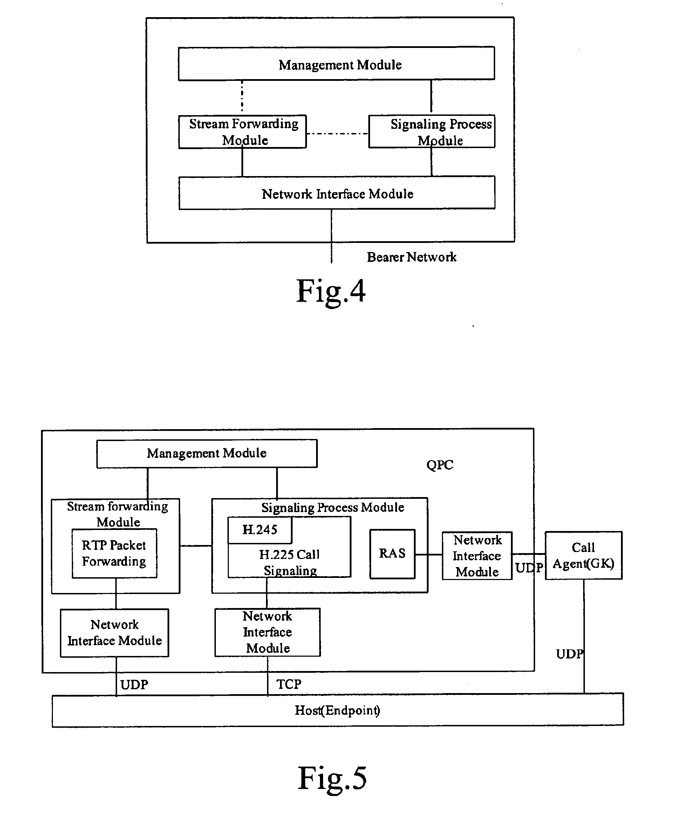

Generally, a QPC provided in the embodiment of the present invention can be divided into two parts: signaling process part and media stream process part. The signaling process part is mainly adapted for processing Registration, Admission and Status (RAS), H.225 call signaling and H.245 messages in H.323 protocol, while the media stream process part is mainly adapted for forwarding service streams. Specifically, a QPC can be divided into multiple logical entities including authentication entity, policy control entity, and stream forwarding entity. As shown in figure 4, the detailed structure of a QPC comprises the modules as follows:

A network interface module is adapted to provide external interfaces for a signaling process module and a stream forwarding module, and process the protocols related to the bearer network, such as IP protocol. The external interface provided by the network interface module may be FE interface, etc.

The signaling process module is adapted to process signaling of services, establish sessions, transmit and receive service signaling through the network interface module, and transmit the address information of service streams in the signaling to a management module.

The management module is adapted to dynamically generate forwarding information of service streams according to the address information of service streams transmitted by the signaling process module, add the QoS related information to the service streams, and transmit the forwarding information to a stream forwarding module to control the forwarding of the streams.

The stream forwarding module is adapted to decide forwarding destinations of the service streams transmitted by the network interface module according to a forwarding list dynamically generated by the management module, and forward the received service streams through the network interface module.

The signaling process module may further provide service information needed by the management module such as information of service identification and user authentication. The management module may further perform service identification and/or user authentication according to the service information reported by the signaling process module, and generate the forwarding information according to the results of service identification and/or user authentication.

Of course, the signaling process module may further decide how and when to release a session, and transmit release information to the management module. The management module may release the items of the forwarding list related with the session.

It can be seen from the above description that, the management module also needs to generate corresponding forwarding information according to the relative information of the initiating terminal and receiving terminal of the call. Specifically, a forwarding list may be dynamically created. The forwarding list contains source and destination address information in transport layer, such as source IP address, destination IP address, source port number and destination port number, and one forwarding relationship corresponds to one item of the forwarding list. Table 1 is an exemplary forwarding list. After receiving a service stream, the stream forwarding module first looks up the forwarding list according to the source address and source port number in the service stream to determine the destination address and destination port number of forwarding the service stream, and then forwards the service stream according to the determined destination address and destination port number.

**Table 1**

| Source address of stream | Source port of stream | Destination address of forwarding | Destination port of forwarding | Priority |
|---|---|---|---|---|
| 10.11.12.1 | 10001 | 61.11.21.1 | 20001 | 1 |
| 10.11.12.1 | 10002 | 61.11.21.1 | 20002 | 2 |
| 10.75.44.206 | 10003 | 66.10.1.2 | 30001 | 3 |

The priority as a policy control parameter is also set in table 1, which can be used by the stream forwarding module to deploy based on the priority. The stream forwarding module may further make use of the priority in table 1 to change QoS identifications in the service streams, such as TOS domain in IP packet, so that the other nodes in the bearer network can forward service streams based on the priority in the service streams. Obviously, setting priority is only one of the schemes, and other schemes may also be adopted, for example, not to set priority or setting other control parameters. The priority and other control parameters belong to the QoS related information.

In addition, one or more network interface modules can be set according to practical demand. For one example, only one network interface module is set, and the signaling process module adapted to receive sessions and the stream forwarding module adapted to forward sessions share the network interface module. For another example, two network interface modules are set, one for the signaling process module and the other for the stream forwarding module.

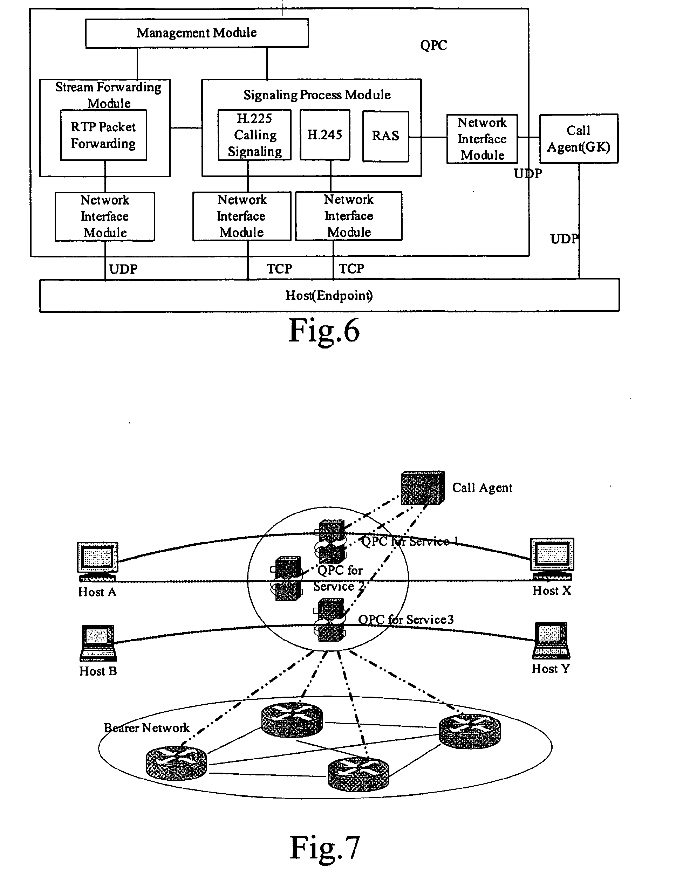

Figure 5 and figure 6 show two exemplary QPCs in accordance with the embodiment of the present invention, where the QPC of figure 5 adopts tunnel mode and the QPC of figure 6 adopts non-tunnel mode. In the tunnel mode, H.245 messages are transmitted through being packaged in H.225 call signaling. In the non-tunnel mode, H.245 messages are transmitted in an individual logical channel.

The signaling process module in figure 5 further comprises a H.225 call signaling process module containing a H.245 module, and a RAS module. Here, the H.225 call signaling process module is connected with Hosts in the bearer network through the network interface module supporting TCP to transmit the service signaling to H.323 nodes, receive the service signaling from H.323 nodes, and transmit the address information of the service streams in the service signaling to the management module. The RAS module is connected with a GK through the network interface module supporting UDP to process the information exchanged between the RAS module and the GK.

The signaling process module in figure 6 comprises a H.225 call signaling process module, a H.245 module and a RAS module. The signaling process module may transmit the address information of the service streams in the service signaling to the management module through the H.245 module.

In practical applications, each module of the QPC provided in the embodiment of the present invention can be disposed in different equipment. For example, the call agent in figure 5 or figure 6, as an optional call agent, may generally be a signaling process device in application layer, such as a GK in H.323 application. Therefore, as to a QoS application, the call agent can implement partial functions of the QPC. For example, the call agent may conduct the policy control and authentication that is originally implemented by the QPC, which is the first mode adopted in above-mentioned Step B. Obviously, the QPC can implement all the functions according to specific demand, and the call agent needs not to be modified.

In addition, since all the QPCs can be under unified control of the call agent, and the QPC which the Host needs to access is determined through signaling exchange with the call agent, multiple QPCs can be physically disposed in the same equipment. Each of the QPCs use different IP addresses or transport layer addresses, so the QPCs can be differentiated according to IP addresses or transport layer addresses.

If the network structure is very complicated, e.g. a countrywide network or an international network, an end-to-end connection can be realized through multiple QPCs, as shown in figure 7.

QoS guaranteed service transferring by the above-mentioned QPC in accordance with the embodiment of the present invention would be described hereinafter.

Suppose there are three kinds of services to be differentiated in the bearer network: Service 1, Service 2 and Service 3. Three QPCs are set for three services respectively: QPC for Service 1, QPC for Service 2 and QPC for Service 3, and three QPCs are overlaid on the bearer network. There is also a need to transfer sessions corresponding to each service into corresponding QPC, and the QPCs conduct service identification, authentication and control to converge the service streams, so that the QoS policy is mapped into the service streams implicitly. Then, the bearer network can conduct stream classification according to the information related with the QoS policies in the service streams. For example, for IP bearer network, the service streams related with Service 1 in any router would be forwarded by the QPC for Service 1, so the source or destination IP address related with Service 1 consequentially contains the IP address of the QPC for Service 1. In this way, the bearer network can conduct stream classification according to information related with the QoS policies in the service streams, i.e., the specific field in the service stream. For example, the IP address of the QPC for Service 1.

The detailed flow in accordance with the embodiment of the present invention is illustrated using the example for implementing address analysis by a GK.

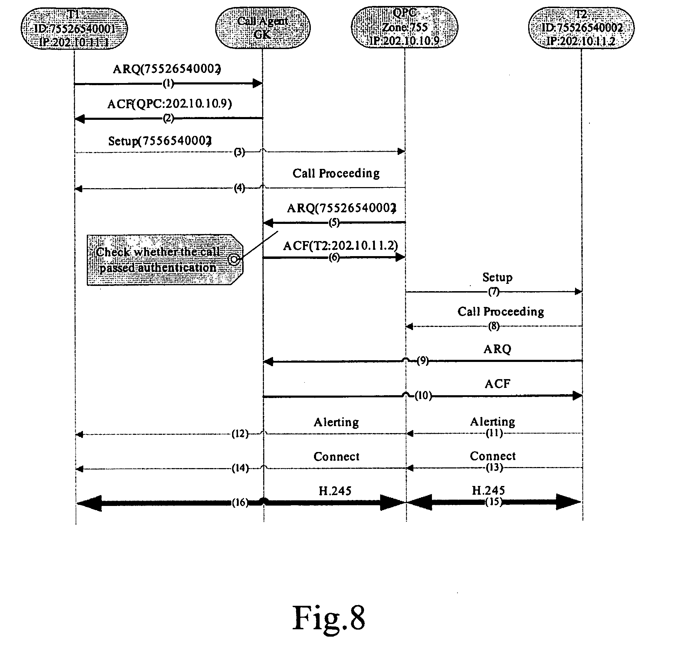

Figure 8 shows a detailed call procedure of the embodiment of figure 7. To realize the procedure, firstly, QoS service zones are set on the call agent. For example, if all the terminal units which first three digits of the numbers are 755 need QoS guarantee, all these terminal units can be set to belong to the same QoS service zone, which can be called QoS-755 service zone for short. Then, a QPC is assigned for the service zone, and in the embodiment, the IP address of the service zone is 202.10.10.9, so all the calls initiated by these terminal units will be transmitted to the QPC. Of course, due to the finite process capacity of a single QPC, if the service quantity is very large in the service zone, a group of QPCs can be assigned for the service zone to share the load of the services.

Through the above configuration, the flow shown in figure 8 corresponds to steps as follows:
Step (1). When T1 with a number of 75526540001 initiates a call to T2 with a number of 75526540002, T1 first transmits an Admission Request (ARQ) message to the GK, and the called number in the ARQ message is 75526540002.
Step (2). After determining that T1 belongs to QoS-755 service zone, and has service right and sufficient residual bandwidth, the GK analyzes the call and directs the call to the QPC and returns an Admission Confirmation (ACF) message to T1. Here, the address of the call directed to the QPC is the address of the QPC. If T1 does not belong to QoS-755 service zone, or T1 has no service right or sufficient residual bandwidth, the GK rejects the call or directly transfers the call to the T2. Here, the right of the user can be authenticated through determining whether T1 belongs to QoS-755 service zone.
Step (3). Upon receiving the ACF message transmitted from the GK, T1 connects the QPC and sends a SETUP message, and the called number is also 75526540002.
Steps (4)~(5). Upon receiving the SETUP message sent by T1, the QPC sends a Call Proceeding message to T1, and sends an ARQ message to the GK, requesting the GK to analyze the address of the called number of 75526540002.
Step (6). After determining the call is initiated by the QPC, the GK checks whether the call is correlative with the call in Step (1), if the call is correlative with the call in Step (1), the GK returns an ACF message containing the actual address of T2 to the QPC.
Steps (7)~(16) The QPC calls T2, completes call transferring from T1 to T2, and then forwards service streams between T1 and T2.

The above steps describe a way of stream convergence through single QPC. During a call removing process, the QPC only needs to forward an EndSession Command message and a Release Complete message to the called end, that is, forwards the messages to T1 if the call is initiated by T1, or forwards the messages to T2 if the call is initiated by T2. Then transmit a Disengage Request (DRQ) message to the GK.

The scheme in accordance with the embodiment of the present invention will be further illustrated with reference to several typical network construction modes hereinafter.

In the first network construction mode, the stream classification demand of application layer is converted to a physical port or source address.

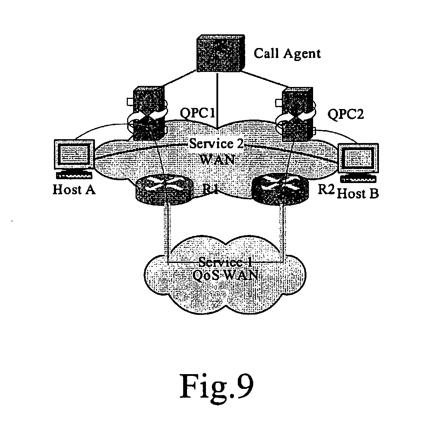

This kind of network construction mode is shown in figure 9. In figure 9, QPC1 and QPC2 are set on the edge of the network requiring QoS guarantee. If the set QPCs are applied in the whole network, they can be disposed on convergence layer. In practical applications, the number of QPCs for a certain service can be one or more than one. In figure 9, R1 and R2 are routers. Call Agent is a call agent, and commonly it is a signaling process equipment of application layer, such as a GK in H.323 application.

In addition, the packets whose source IP address is the address of QPC1 need to be set on R 1 as service data requiring QoS guarantee; and the packets whose source IP address is the address of QPC2 need to be set on R2 as service data requiring QoS guarantee. Therefore, R1 is a gateway of QPC1, and R2 is gateway of QPC2.

Through the above configuration, if Host A needs to establish a session of Service 1 with Host B, Call Agent first controls the session requiring QoS guarantee, i.e., the session of Service 1 will be transferred by QPC1 and QPC2, while non-QoS guaranteed services are riot transferred through QPC. Since the gateway of QPC1 is R1, and the gateway of QPC2 is R2, the service streams of Service 1 are consequentially transmitted to R1 and R2. Since the service streams whose source IP address is the address of QPC1 are set on R1 as requiring QoS guarantee, R1 will transmit the service streams to a QoS WAN, thereby realizing QoS guarantee of Service 1. Since Service 2 is a non-QoS guaranteed service, Call Agent will not permit it to be transmitted into the QPC. Therefore, Service 2 will not be transmitted into a QoS WAN.

Obviously, if QPC1 is directly connected to a certain physical port of R1, R1 can be set as identifying services according to the physical port, which is the same with R2.

In the network construction mode to be described hereinafter, which is not part of the present invention, the stream classification demand of application layer is converted to a destination address.

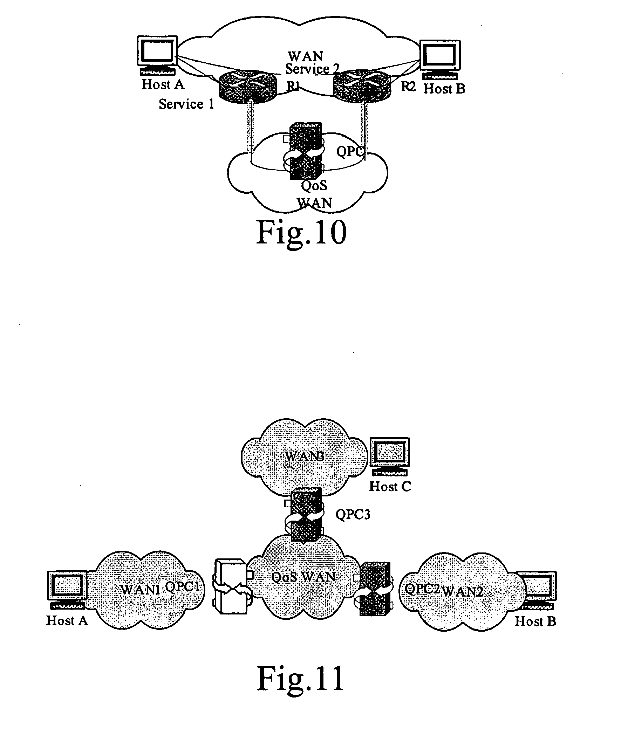

Figure 10 shows an example of this network construction mode. The difference between this mode and the mode illustrated in figure 9 is: in this mode, The QPCs can be disposed in areas close to the core of the network, such as in backbone layer, and the number of QPCs can be one or more than one, thereby avoiding disposing large numbers of QPCs on the edge of the network. The QPC in figure 10 is disposed in a QoS WAN. In addition, the optional Call Agent is omitted in figure 10.

Based on the network construction mode shown in figure 10, the service stream whose destination address is the address of the QPC will be set first as requiring QoS guarantee in all the edge routers in the bearer network. Then the Call Agent transfers the service streams of Service 1 requiring QoS guarantee to the QPC, and the information related with the destination address of the service stream is the address information of the QPC.

Through the above configuration, in figure 10, when the service stream from Host A to the QPC passes through R1, since the destination address of the service stream is the address of the QPC, R1 will transmit the service stream to a QoS WAN, thereby realizing QoS guarantee of the service. Of course, the service stream will be transmitted into QPC and transferred by the QPC. The process of R2 is the same as that of R1. Since Service 2 is a non-QoS guaranteed service, the Call Agent will not transfer the service stream of Service 2 to the QPC, and the destination address of the service stream of Service 2 is not the address of the QPC. Therefore, R1 and R2 will not transmit the service stream of Service 2 into a QoS WAN.

Both of the above-mentioned two network construction modes give detailed stream classification mode. In practical applications, the stream classification demand of application layer may also be converted to a combination of destination addresses and destination ports, or other information, and all network construction modes can be used in combination. For example, a part of QPCs are disposed on the edge of the network and a part of QPCs are disposed in the core area of the network.

As shown in figure 11, a third network construction mode will be given hereinafter. This kind of network construction mode can be regarded as a special case of the network construction mode shown in figure 9. In practical applications, a service gateway office may be formed in this kind of network construction mode, so the network construction mode is proposed solely.

In figure 11, QoS guaranteed services need to be interconnected among three different WANs, and the bandwidth among the WANs is finite. The QPCs are disposed on the edge of the interconnection, so that all the service streams related with the physical ports of the QPCs may be QoS guaranteed. The appropriate maximum bandwidth is set on the QPCs.

Taking the example for the interconnection between Host A and Host C, the session establishing procedure comprises the following steps:
Step (1). Host A requests a service session with QoS guarantee with Host C.
Step (2). Host A connects to QPC 1 first; QPC1 performs service authentication to the session and determines whether the residual bandwidth is enough, if so, the request will be transferred to QPC3; otherwise, the request will be rejected.
Step (3) QPC3 determines whether the residual bandwidth is enough, if so, a QoS guaranteed connection between QPC1 and QPC3 will be established, and the request will be transferred to Host C; otherwise, the request will be rejected.
Step (4). A QoS guaranteed session is established between Host A and Host C through QPC1 and QPC3.

It can be seen from the network construction mode shown in figure 11, the QPC serves as a gateway office for service interconnection among different WANs. Converging all the interconnected services to the QPC can not only guarantee service QoS using finite bandwidth, but also monitor and control services effectively.

In practical applications, the scheme in accordance with another embodiment of the present invention can make the service streams partially pass through the QPC and transferred by the QPC, so as to apply corresponding QoS policies only to the transferred service streams.

To sum up, the above description is only the preferred embodiments of the present invention and is not to be construed as limiting the protection scope thereof.

## Claims

1. A method for controlling Quality of Service, QoS, in a network comprising:
a) setting up a QoS policy converter, QPC, for each kind of QoS guaranteed service, said QPC comprising an IP address ;
b) transferring by a call agent (GK) service streams of a service requiring QoS guarantee to the QPC corresponding to the respective kind of service ;
c) forwarding the transferred service streams by the QPC so that the source IP address related with the service consequentially contains the IP address of the QPC for the service ; and
d) transmitting by a router (R) service streams whose source IP address contains an IP address of a QPC being set on the router (R) as requiring a quality of service guarantee to a QoS guaranteed Wide Area Network, QoS WAN, thereby realizing QoS guarantee of the service.

2. The method according to claim 1,
wherein the call agent determines the Quality of Service policy converter (QPC) corresponding to the service according to a relationship between the service and the Quality of Service policy converter (QPC) and controls service streams of the service to be transmitted to the corresponding Quality of Service (QoS) policy converter (QPC).

3. The method according to claim 2,
wherein the call agent determines the corresponding relationship through interaction with the Quality of Service policy converter (QPC) or according to a preset corresponding relationship.

4. The method according to claim 2 or claim 3,
wherein the service adopts H.323 protocol, and the call agent is a Gatekeeper GK.

5. The method according to claim 2, further comprising:
setting a piece of identification information for the Quality of Service policy converter (QPC); and
said transmitting the service data to the Quality of Service policy converter (QPC), under the control of the call agent comprises:
the call agent determining the corresponding Quality of Service policy converter (QPC) according to the identification information in the service stream and controlling to transmit the service stream to the corresponding Quality of Service policy converter (QPC).

6. The method according to claim 5,
wherein the service adopts H.323 protocol, and the identification information is an access code;
a terminal initiates a call containing the access code and a called number;
said determining the corresponding Quality of Service policy converter (QPC) according to the identification information in the service data comprises:
the call agent determining the corresponding Quality of Service policy converter (QPC) according to the access code in the call.

7. The method according to claim 1, further comprising before the service data being forwarded to the QoS WAN:
the Quality of Service policy converter (QPC) performing any one or any combination of:
authenticating a user corresponding to the service, and service identification.

8. The method according to claim 1 or claim 7, further comprising before the service data being forwarded to the QoS WAN:
the Quality of Service policy converter (QPC) determining a current residual bandwidth.

9. The method according to claim 1, wherein:
said forwarding the service stream by the Quality of Service policy converter (QPC) comprises:
creating, by the Quality of Service policy converter (QPC), a forwarding list according to information of an initiator (Host A) and a recipient (Host B) of the service, and forwarding the service stream according to the forwarding list; wherein
said forwarding list comprises at least source address information and destination address information of the service stream.

10. The method according to claim 9,
wherein the forwarding list further comprises priority information of the service stream.

11. The method according to claim 10, further comprising:
modifying, by the Quality of Service policy converter (QPC), priority information carried in the service stream according to the priority information in the forwarding list.

## Patentansprüche

1. Verfahren zur Steuerung von Dienstgüte QoS in einem Netzwerk, mit den folgenden Schritten:
a) Einrichten eines QoS-Richtlinienumsetzers QPC fiir jede Art von QoSgarantiertem Dienst, wobei der QPC eine IP-Adresse umfasst;
b) Transferieren von Dienstströmen eines QoS-Garantie erfordernden Dienstes durch einen Call Agent (GK) zu dem QPC, der der jeweiligen Art von Dienst entspricht;
c) Weiterleiten der transferierten Dienstströme durch den QPC dergestalt, dass die mit dem Dienst in Beziehung stehende Quellen-IP-Adresse folglich die IP-Adresse des QPC fiir den Dienst enthält; und
d) Übertragen von Dienstströmen, deren Quellen-IP-Adresse eine IP-Adresse eines QPC enthält, der auf einem Router (R) als eine Dienstgütegarantie erfordernd gesetzt ist, durch den Router (R) zu einem QoS-garantierten großflächigen Netzwerk QoS WAN, um dadurch QoS-Garantie des Dienstes zu realisieren.

2. Verfahren nach Anspruch 1, wobei der Call Agent den Dienstgüte-Richtlinienumsetzer (QPC), der dem Dienst entspricht, gemäß einer Beziehung zwischen dem Dienst und dem Dienstgüte-Richtlinienumsetzer (QPC) bestimmt und zu dem entsprechenden Dienstgüte-(QoS-)Richtlinienumsetzer (QPC) zu übertragende Dienstströme des Dienstes steuert.

3. Verfahren nach Anspruch 2, wobei der Call Agent die entsprechende Beziehung durch Interaktion mit dem Dienstgüte-Richtlinienumsetzer (QPC) oder gemäß einer voreingestellten Entsprechungsbeziehung bestimmt.

4. Verfahren nach Anspruch 2 oder Anspruch 3, wobei der Dienst das H.323-Protokoll verwendet und der Call Agent ein Gatekeeper GK ist.

5. Verfahren nach Anspruch 2, das ferner Folgendes umfasst:
Setzen eines Identifikationsinformationselements fiir den Dienstgüte-Richtlinienumsetzer (QPC); und
wobei das Übertragen der Dienstdaten zu dem Dienstgüte-Richtlinienumsetzer (QPC) unter der Kontrolle des Call Agent Folgendes umfasst:
der Call Agent bestimmt den entsprechenden Dienstgüte-Richtlinienumsetzer (QPC) gemäß den Identifikationsinformationen in dem Dienststrom und steuert, um den Dienststrom zu dem entsprechenden Dienstgüte-Richtlinienumsetzer (QPC) zu übertragen.

6. Verfahren nach Anspruch 5,
wobei der Dienst das H.323-Protokoll verwendet und die Identifikationsinformationen ein Zugangscode sind;
ein Endgerät einen Anruf einleitet, der den Zugangscode und eine angerufene Nummer enthält; und
das Bestimmen des entsprechenden Dienstgüte-Richtlinienumsetzers (QPC) gemäß den Identifikationsinformationen in den Dienstdaten Folgendes umfasst:
der Call Agent bestimmt den entsprechenden Dienstgüte-Richtlinienumsetzer (QPC) gemäß dem Zugangscode in dem Anruf.

7. Verfahren nach Anspruch 1, das ferner vor dem Weiterleiten der Dienstdaten zu dem QoS WAN Folgendes umfasst:
der Dienstgüte-Richtlinienumsetzer (QPC) führt eine beliebige oder eine beliebige Kombination der folgenden Alternativen durch:
Authentifizieren eines dem Dienst entsprechenden Benutzers und Dienstidentifikation.

8. Verfahren nach Anspruch 1 oder Anspruch 7, das ferner vor dem Weiterleiten der Dienstdaten zu dem QoS WAN Folgendes umfasst:
der Dienstgüte-Richtlinienumsetzer (QPC) bestimmt eine derzeitige Restbandbreite.

9. Verfahren nach Anspruch 1, wobei
das Weiterleiten des Dienststroms durch den Dienstgüte-Richtlinienumsetzer (QPC) Folgendes umfasst:
Erzeugen einer Weiterleitungsliste durch den Dienstgüte-Richtlinienumsetzer (QPC) gemäß Informationen eines Initiators (Host A) und eines Empfängers (Host B) des Dienstes und Weiterleiten des Dienststroms gemäß der Weiterleitungsliste; wobei die Weiterleitungsliste mindestens Quellenadresseninformationen und Zieladresseninformationen des Dienststroms umfasst.

10. Verfahren nach Anspruch 9,
wobei die Weiterleitungsliste ferner Prioritätsinformationen des Dienststroms umfasst.

11. Verfahren nach Anspruch 10, ferner umfassend:
Modifizieren von in dem Dienststrom geführten Prioritätsinformationen durch den Dienstgüte-Richtlinienumsetzer (QPC) gemäß den Prioritätsinformationen in der Weiterleitungsliste.

## Revendications

1. Procédé de contrôle de la Qualité de Service, QoS, dans un réseau comprenant :
a) l'établissement d'un convertisseur de règle QoS, QPC, pour chaque type de service à QoS garantie, ledit QPC comprenant une adresse IP ;
b) le transfert par un agent d'appel (GK) de trains de service d'un service demandant une garantie de QoS au QPC correspondant au type de service respectif ;
c) l'acheminement par le QPC des trains de service transférés de telle sorte que l'adresse IP source liée au service contienne en conséquence l'adresse IP du QPC du service ; et
d) la transmission par un routeur (R) des trains de service dont l'adresse IP source contient une adresse IP d'un QPC établi sur le routeur (R) comme demandant une garantie de qualité de service à un Grand Réseau à QoS Garantie, QoS WAN, réalisant ainsi la garantie de QoS du service.

2. Procédé selon la revendication 1,
dans lequel l'agent d'appel détermine le convertisseur de règle de Qualité de Service (QPC) correspondant au service en fonction d'une relation entre le service et le convertisseur de règle de Qualité de Service (QPC) et contrôle les trains de service du service à transmettre au convertisseur de règle de Qualité de Service (QoS), (QPC), correspondant.

3. Procédé selon la revendication 2,
dans lequel l'agent d'appel détermine la relation correspondante par interaction avec le convertisseur de règle de Qualité de Service (QPC) ou en fonction d'une relation correspondante préétablie.

4. Procédé selon la revendication 2 ou la revendication 3,
dans lequel le service adopte le protocole H.323, et l'agent d'appel est un GK Portier.

5. Procédé selon la revendication 2, comprenant en outre :
l'établissement d'une information d'identification du convertisseur de règle de Qualité de Service (QPC) ; et
ladite transmission des données de service au convertisseur de règle de Qualité de Service (QPC), sous la commande de l'agent d'appel comprend :
la détermination par l'agent d'appel du convertisseur de règle de Qualité de Service (QPC) correspondant en fonction de l'information d'identification dans le train de service et le contrôle par l'agent d'appel de la transmission du train de service au convertisseur de règle de Qualité de Service (QPC) correspondant.

6. Procédé selon la revendication 5,
dans lequel le service adopte le protocole H.323, et l'information d'identification est un code d'accès ;
un terminal lance un appel contenant le code d'accès et un numéro appelé ;
ladite détermination du convertisseur de règle de Qualité de Service (QPC) correspondant en fonction de l'information d'identification dans les données de service comprend :
la détermination par l'agent d'appel du convertisseur de règle de Qualité de Service (QPC) correspondant en fonction du code d'accès dans l'appel.

7. Procédé selon la revendication 1, comprenant en outre avant l'acheminement des données de service au QoS WAN :
l'exécution par le convertisseur de règle de Qualité de Service (QPC) de l'une quelconque des opérations suivantes ou d'une combinaison de celles-ci :
authentification d'un utilisateur correspondant au service, et identification du service.

8. Procédé selon la revendication 1 ou la revendication 7, comprenant en outre avant l'acheminement des données de service au QoS WAN :
la détermination par le convertisseur de règle de Qualité de Service (QPC) d'une largeur de bande résiduelle courante.

9. Procédé selon la revendication 1, dans lequel :
ledit acheminement du train de service par le convertisseur de règle de Qualité de Service (QPC) comprend :
la création, par le convertisseur de règle de Qualité de Service (QPC), d'une liste d'acheminement en fonction de l'information d'un expéditeur (Hôte A) et d'un destinataire (Hôte B) du service, et l'acheminement du train de service en fonction de la liste d'acheminement ; ladite liste d'acheminement comprenant au moins des informations d'adresse source et des informations d'adresse destinataire du train de service.

10. Procédé selon la revendication 9,
dans lequel la liste d'acheminement comprend en outre des informations de priorité du train de service.

11. Procédé selon la revendication 10, comprenant en outre :
la modification, par le convertisseur de règle de Qualité de Service (QPC) d'informations de priorité transportées dans le train de service conformément aux informations de priorité figurant dans la liste d'acheminement.
